Europäisches Patentamt

European Patent Office

Office européen des brevets

(19)

(11) Veröffentlichungsnummer: **0 065 490**
**A1**

# EUROPÄISCHE PATENTANMELDUNG

(12)

(21) Anmeldenummer: **82810216.0**

(22) Anmeldetag: **19.05.82**

(51) Int. Cl.³: **C 02 F 1/48**

(30) Priorität: **20.05.81 DD 230096**

(43) Veröffentlichungstag der Anmeldung: **24.11.82**
**Patentblatt 82/47**

(84) Benannte Vertragsstaaten: **AT CH DE FR GB IT LI NL SE**

(71) Anmelder: **Jenoptik Jena G.m.b.H., Carl-Zeiss-Strasse 1,**
**DDR-6900 Jena (DD)**
(84) Benannte Vertragsstaaten: **DE**

(71) Anmelder: **VEB Carl Zeiss Jena, Carl-Zeiss-Strasse 1,**
**DDR-6900 Jena (DD)**
(84) Benannte Vertragsstaaten: **CH FR GB IT LI NL SE AT**

(72) Erfinder: **Kohl, Dieter, Jansonstrasse 22, DDR-6900 Jena**
**(DD)**
Erfinder: **Schilling, Hans-Joachim,**
**Judith-Auer-Strasse 27, DDR-6902 Jena-Neulobeda (DD)**

(74) Vertreter: **Bovard, Fritz Albert et al, Bovard & Cie**
**Patentanwälte VSP Optingenstrasse 16,**
**CH-3000 Bern 25 (CH)**

(54) **Anordnung zur Veränderung der Salzkonzentration von Flüssigkeiten.**

㊷ Bei einer Anordnung zur Veränderung der Salzkonzentration von Flüssigkeiten sollen die Wirtschaftlichkeit, die Anwendungsbreite und die Auswirkungen auf die Umweltbedingungen erhöht werden. Aus diesem Grund ist mit möglichst einfachen Mitteln ohne Ionenaustausch und ohne elektrolytische Abscheidung eine energiesparende, umweltfreundliche sowie technisch gut beherrschbare Anordnung zur Änderung der Salzkonzentration von Flüssigkeiten in grossen Konzentrationsbereichen zu schaffen. Erfindungsgemäss wird durch die gleichzeitige Einwirkung eines magnetischen und eines elektrischen Wechselfeldes auf die Flüssigkeit eine Ionenbewegung unter Verhinderung von Ionenrekombinationen hervorgerufen. Eine gezielte Ionenbewegung führt zu lokalen Zonen unterschiedlicher Ionenkonzentration und -polarität, aus denen die Flüssigkeitsvolumina entnehmbar sind. Die Umrichtung der Wechselfelder verhindert eine elektrolytische Abscheidung, insbesondere von abscheidbaren Metallen, an den Elektroden.

-1-

Anordnung zur Veränderung der Salzkonzentration von Flüssigkeiten

Die Erfindung betrifft eine Anordnung zur Veränderung der Salzkonzentration von Flüssigkeiten mit einer großen Anwendungsbreite zur elektrophysikalischen Aufbereitung von Flüssigkeiten, angefangen von der Reinigung (Entsalzung) der Flüssigkeiten bis zur Rohstoffgewinnung (Salzgewinnung). Besondere gesellschaftliche Bedeutung erlangt diese Aufbereitung für den Umweltschutz (z.B. Abwasserbehandlung und Salzrückgewinnung). Ein weiterer Entwicklungsschwerpunkt ist die Trinkwasser- und Rohstoffgewinnung insbesondere aus Meerwasser.

Es ist seit langem prinzipiell bekannt, die Salzkonzentration von Lösungen durch Verdünnen zu verändern. Dabei ist die Zuführung von reinem bzw. salzarmen Wasser notwendig. Abgesehen davon, daß z.B. in der Abwassertechnik wasserwirtschaftliche Grenzwerte eingehalten werden können, sich aber an der Gesamtbelastung der Gewässer mit Salzen nichts ändert, wirken sich die in letzter Zeit gestiegenen Kosten für das zuzuführende reine Wasser und die Kosten für das volumenmäßig vergrößerte Abwasser doch auf das Gesamtverfahren aus.
Es ist auch prinzipiell bekannt, salzhaltige Flüssigkeiten einzudampfen, um die Salzkonzentration zu erhöhen, bzw. um Salze aus Lösungen zu gewinnen. Die zur Verdampfung des Lösungsmittels zuzuführende Energie ist hoch und großtechnische Anlagen sind daher kaum wirtschaftlich. Bekannt sind auch Elektrolyseverfahren, bei denen unter Zufuhr von elektrischer Energie an den Elektroden (Anode und Katode) eine chemische Reaktion der gelösten Stoffe erzwungen wird.

An der Anode findet eine Oxidation der entsprechenden Ionen, an der Katode eine Reduktion der Ionen statt. In der Elektrolysezelle können nur abscheidbare Kationen (Metalle) und Anionen, die in ihrer oxidierten Form aus den Gleichgewichtsreaktionen entfernt werden (Zyanid, Chlorid ...) in ihrer Konzentration verändert werden. Die Konzentration der Ionen ist, bis auf eine Häufung an der Elektrodenoberfläche, die praktisch nicht ausnutzbar ist ($\approx$ 0,1 mm) aufgrund der Elektroneutralitätsbedingung an jedem Ort des Elektrolysegefäßes gleich groß. Im praktischen Betrieb genügt das Elektrolyseverfahren selten den gestellten wasserwirtschaftlichen Einleitungsbedingungen für Abwässer, da sich bei der Elektrolyse gering konzentrierter Metallsalze der energetische Wirkungsgrad verschlechtert.

Vom Anwendungsgebiet her weit verbreitet ist das Verfahren (Hartinger, "Taschenbuch der Abwasserbehandlung") mittels Ionenaustausch bestimmte Ionen anzureichern. Durch Regenerieren der Austauschermaterialien erhält man in den Eluaten die Ionen in erheblich größeren Konzentrationen. Eine chemische Weiterbehandlung der Regenerate bis zum Erhalt der gewünschten Salze ist zumeist notwendig.

Um die Ionenaustauscher wieder zu aktivieren, müssen Säuren, Laugen oder Salze im Überschuß eingesetzt werden. Mit derartigen Anlagen kann letztenendes eine Aufsalzung der Gewässer nicht vermieden werden; im Gegenteil, durch die Regeneriermittelüberschüsse und die nachfolgend notwendigen Neutralisationen wird die Salzlast höher, als sie im eigentlichen Abwasser vorher war.

Mit Ionenaustauschern können die wasserwirtschaftlichen Forderungen; speziell für die zum Austausch verwendeten Ionen ($Cl^-$) nicht eingehalten werden.

Außerdem sind sie kostenaufwendig in bezug auf Investitionen, Energieverbrauch, Chemikalien und Wartung.

- 3 -

Darüber hinaus sind Membranverfahren, wie Ultrafiltration, umgekehrte Osmose und Elektrodialyse bekannt.

Bei dem Verfahren der umgekehrten Osmose (z.B. DE-OS 2553 416) wird ein Druck auf eine Salzlösung, die durch eine semipermeable Wand von einer reinen Lösung getrennt ist, ausgeübt, so daß Lösungsmittel aus der Salzlösung in die reine Lösung diffundiert. Die Salzlösung wird aufkonzentriert.

Nachteilig sind die hohen Arbeitsdrücke (20 .... 150 bar), die schwierige strömungsmechanische Führung der Lösung und die Verwendung von Membranen, wodurch das Verfahren aufwendig wird. Membranen verschleißen und erfordern die Einhaltung definierter Arbeitsbedingungen. Eine Aufkonzentrierung auf mehr als 10 %ige Salzlösung ist extrem unwirtschaftlich. Ferner tritt generell ein sog. Salzschlupf auf.

Beim Elektrodialyseverfahren (z.B. DE-OS 2621 590) wird mittels einer semipermeablen Wand eine Trennung zwischen geladenen Ionen und anderen großen Molekülen bewirkt.

Nachteilig ist auch hier, wie bei allen Membranverfahren, die Verwendung einer Membran mit den bereits genannten Eigenschaften. Weiterhin arbeitet dieses Verfahren nur bei einer hohen Konzentrationsdifferenz zwischen Lösung und der Konzentration dieser Ionen als sog. "Festionen" im Austauschermaterial.

Das Verfahren ist insofern nur für verdünnte Lösungen geeignet. Wegen der Rückdiffusion sind nur geringe Konzentrationsgefälle erreichbar.

Die Verbesserung der Anwendungsmöglichkeiten der Membranverfahren ist Schwerpunkt der Forschung. Fortschritte wurden bereits durch synthetische organische Ionenaustauschermembranen erzielt, die jeweils nur Kationen oder Anionen diffundieren lassen, wodurch entweder ein Aufsalzen oder Entsalzen von Lösungen möglich ist. Ein Beispiel für die Membranentwicklung ist aus der DE-OS 2623 351 ersichtlich.

Die Membranverbesserungen bringen zwar schrittweise Anwendungsvorteile, können aber die der Membrantechnik eigenen Nachteile, insbesondere die Unwirtschaftlichkeit, nicht beseitigen.

- 4 -

Ziel der Erfindung ist die Verringerung des Investitions-, Wartungs- und Energieaufwandes sowie die Verbesserung der Umweltbedingungen und Erhöhung der Anwendungsbreite.

Der Erfindung liegt die Aufgabe zugrunde, mit möglichst einfachen Mitteln ohne Ionenaustausch, ohne Membran, ohne zusätzlich reine Flüssigkeit zuzuführen bzw. energiereich abzuführen und ohne elektrolytische Abscheidung eine technisch gut beherrschbare und wirtschaftliche Anordnung zur Änderung der Salzkonzentration von Flüssigkeiten in großen Konzentrationsbereichen zu schaffen.

Diese Aufgabe wird bei einer Anordnung zur Veränderung der Salzkonzentration von Flüssigkeiten erfindungsgemäß dadurch gelöst, daß die Flüssigkeit gleichzeitig und gleichräumig einem magnetischen Wechselfeld und einem sich zu diesem synchron ändernden elektrischen Wechselfeld ungleicher Feldlinienrichtungen ausgesetzt ist und daß in der Flüssigkeit Strömungsbarrieren gegen die Bewegungsrichtung der Ionen angeordnet sind.

Es ist vorteilhaft, wenn die Komponenten der Richtungen der Vektoren des magnetischen und elektrischen Wechselfeldes senkrecht aufeinander stehen.

Desweiteren sind ein Zufluß der zu behandelnden Flüssigkeit, vorzugsweise in einem Volumenbereich der Flüssigkeit, welcher der Wirkung des elektrischen und des magnetischen Wechselfeldes ausgesetzt ist, wobei der Zufluß in einer von der durch die Einwirkung des magnetischen und des elektrischen Wechselfeldes hervorgerufenen Bewegungsrichtung der Ionen der Flüssigkeit abweichenden Richtung erfolgt, sowie voneinander getrennte Abflüsse in den jeweils unterschiedlichen Konzentrations- und unterschiedlichen Ionenpolaritätsbereichen der Flüssigkeit vorteilhaft.

- 5 -

Von Vorteil ist außerdem, wenn die getrennten Abflüsse aus den unterschiedlichen Ionenpolaritätsbereichen der Flüssigkeit in einem Gefäß zusammengeführt sind, das vorzugsweise im thermischen Kontakt zu der zu behandelnden Flüssigkeit steht.

Darüberhinaus ist es vorteilhaft, wenn jeweils einer oder mehrere Abflüsse aus einem der Konzentrationsbereiche der Flüssigkeit erneut ein- oder mehrfach jeweils demselben oder jeweils einem anderen elektrischen und magnetischen Wechselfeld ausgesetzt sind.

Erfindungsgemäß wird die Flüssigkeit den gleichzeitigen und gleichräumigen Einwirkungen eines nichtstationären magnetischen und eines nichtstationären elektrischen Feldes ausgesetzt. Die beiden sich synchron ändernden Felder stehen dabei in den Komponenten der Richtung ihrer Vektoren vorzugsweise senkrecht aufeinander. Durch die Feldereinwirkungen wird eine Ionenbewegung der Flüssigkeit hervorgerufen. Strömungsbarrieren in Richtung dieser Ionenbewegung verhindern eine Bewegung der Flüssigkeit in dieser Richtung, so daß die Ionen während ihrer Bewegung nicht untereinander rekombinieren können.

Auf diese Art und Weise bilden sich aufgrund der gezielten Ionenbewegung relativ zur Flüssigkeit in der Flüssigkeit lokale Zonen unterschiedlicher Ionenkonzentration und -polarität, aus denen über geeignete Abflüsse die Flüssigkeit mit den entsprechenden Ionenkonzentrationen und -polaritäten entnommen werden kann. Durch die synchrone Änderung der Wechselfelder bleibt die Bewegungsrichtung der Ionen konstant. Die Feldumrichtung bewirkt, daß an den Feldelektroden eine eventuelle elektrolytische Abscheidung bestimmter Elemente, insbesondere bestimmter leicht abscheidbarer Metalle, die sich aus Analogien zur Elektrolyse, nachteilig ergeben könnte, vermieden wird.

Für größere Flüssigkeitsvolumina kann die erfindungsgemäße Lösung als Durchflußsystem ausgebildet sein. Die zu behandelnde Flüssigkeit wird dabei vorzugsweise quer zur Ionenbewegung durch das elektrische Feld und das magnetische Feld dem Wir-

- 6 -

kungsbereich dieser Felder zugeführt und fließt über die Entnahmestellen in den lokalen Zonen der unterschiedlichen Ionenkonzentrationen und -polarität ab. Damit wird die erfindungsgemäße Anordnung auch zur wirtschaftlichen Behandlung größerer Flüssigkeitsmengen (z.B. Abwasserbehandlung) verwendbar, wobei gleichzeitig die Flüssigkeit geringer Salzkonzentration (gereinigte Flüssigkeit) und die polaritätsabhängigen ionenangereicherten Flüssigkeitsanteile im Durchflußverfahren entnehmbar sind. Die letztgenannten Anteile können zur Ionenrekombination vorteilhafterweise wieder zusammengeführt und erneut der erfindungsgemäßen Feldeinwirkung mit Ionenbewegung und -trennung in dem gleichen oder einem anderen Durchflußsystem (Kreislauf- oder Kaskadensystem) ausgesetzt werden. Das Ergebnis einer solchen Stufenbehandlung der Flüssigkeit ist eine weitere Konzentrationserhöhung der Flüssigkeit in den entsprechenden lokalen Zonen bis zur möglichen Salzabscheidung (Rohstoffgewinnung) und eine weitere Abspaltung niedrigkonzentrierter Flüssigkeitsanteile (gereinigte bzw. entsalzte Flüssigkeit).

Die Erhöhung bzw. Verringerung der Salzkonzentrationen in den Flüssigkeitszonen erfolgt dabei auch für größere zu behandelnde Flüssigkeitsmengen mit einem Minimum an Energieaufwand und ohne Belastung der Umwelt, d.h. durch Anwendung der Erfindung ist insbesondere ein wirtschaftlich günstiges und umweltfreundliches Verfahren zur gleichzeitigen Rohstoffgewinnung und Flüssigkeitsreinigung (Abwasserbehandlung) möglich.

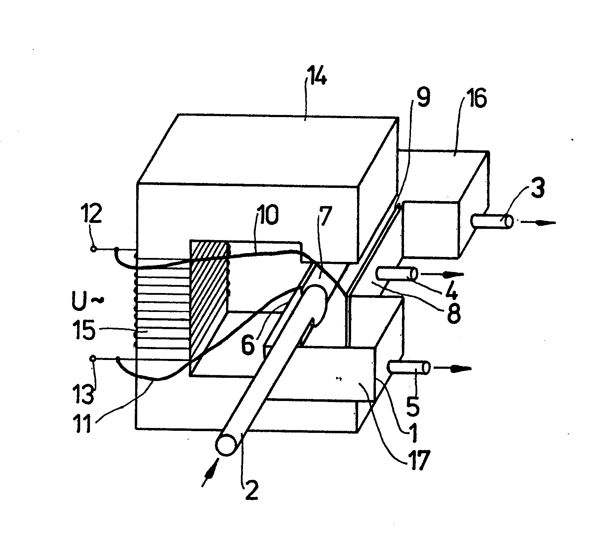

Die Erfindung soll nachstehend anhand eines in der Zeichnung dargestellten Ausführungsbeispiels näher erläutert werden.
In der Zeichnung ist ein Durchflußgefäß 1 mit einem rohrförmigen Zufluß 2 und drei ebenfalls rohrförmigen Abflüssen 3, 4, 5 für eine zu behandelnde Flüssigkeit abgebildet.
In dem Durchflußgefäß 1 sind an einer Gefäßwand 6 eine flächenhafte Elektrode 7 und an einer der Gefäßwand 6 gegenüberliegenden Gefäßwand 8 eine gleichfalls flächenhafte Elektrode 9 angeordnet. Die Elektroden 7 und 9 sind über Anschlußleitungen 10, 11 mit den Polen 12, 13 einer Wechselspannung U verbunden. Das Durchflußgefäß 1 ist im Luftspalt eines Elektromagnetkerns 14 angeordnet, dessen Spule 15 auch an die Pole 12, 13 der Wechselspannung U angeschlossen ist.

Mit der erfindungsgemäßen Anordnung erzeugt die Wechselspannung U ein magnetisches und ein elektrisches Wechselfeld, deren Feldlinien sich schneiden. Diese Wechselfelder, deren gleichzeitiger und gleichräumiger Einwirkung das Durchflußgefäß 1 mit der zu behandelnden Flüssigkeit unterzogen ist, weisen jeweils eine synchrone Richtungsänderung auf und üben auf das Durchflußgefäß 1 eine Kraft aus, die senkrecht zur Ebene der Feldlinien wirkt. Die Ionen der Flüssigkeit, die durch den Zyklus 2 in das Durchflußgefäß 1 einströmt, führen aufgrund der Feldereinwirkung eine Bewegung aus, die je nach ihrer Ionenpolarität auf eine Gefäßwand 16 oder 17 gerichtet ist. Es kommt zu einer gezielten Ionentrennung in der Flüssigkeit, so daß in den Gefäßbereichen der Abflüsse 3 und 5 gegenüber dem mittleren Gefäßbereich des Durchflußgefäßes 1 am Abfluß 4 eine erhöhte polaritätsabhängige Ionenkonzentration zu verzeichnen ist. Bei der konstruktiven Ausgestaltung des angeführten Durchflußgefäßes verhindern die Gefäßwände 16 und 17, wie auch die Gefäßerweiterungen an den Abflüssen 3 und 5 eine Flüssigkeitsbewegung in Richtung dieser Ionenbewegung. Damit wirken die Gefäßwände 16 und 17 als Strömungsbarrieren. Für andere Konstruktionsformen des Flüssigkeitsbehälters, bei denen die Gefäßwände diese bewußte Flüssigkeitsbewegung nicht bzw. nicht hinreichend genug verhindern, sind zusätzliche Strömungsbarrieren bzw. Strömungsleiteinrichtungen erforderlich, welche die gesamte Ionenbewegung möglichst wenig, die Flüssigkeitsbewegung in diese Richtung jedoch möglichst stark beeinträchtigen bzw. unterdrücken. Auf diese Art und Weise wird eine Rekombinationsmöglichkeit der getrennten Ionen vermieden. Gleiches gilt für den Stauraum der Flüssigkeit an den Abflüssen 3, 4, 5. Stau- bzw. strömungsbedingte Turbulenzen an den Abflüssen 3, 4, 5 können durch die konstruktive Ausgestaltung des Durchflußgefäßes 1 mit den Stauräumen an den Abflüssen 3, 5 nicht

- 8 -

zu einer Rekombination der getrennten Ionen führen. Erfindungsgemäß entstehen durch gezielte Ionentrennung im Durchflußgefäß 1 drei Zonen unterschiedlicher und polaritätsabhängiger Ionenkonzentration, aus denen die Flüssigkeitsanteile jeweils entnehmbar sind. Aus dem Abfluß 4 ist der Flüssigkeitsanteil mit einer geringen Ionenkonzentration entnehmbar, während die Flüssigkeitsanteile aus den Abflüssen 3 und 5, getrennt nach Ionenpolarität, eine hohe Ionenkonzentration besitzen. Mit der erfindungsgemäßen Anordnung wird also gleichzeitig eine Erhöhung und eine Verringerung der Salzkonzentration der zu behandelnden Flüssigkeit ermöglicht. Die Flüssigkeitsanteile aus dem Abfluß 4 bzw. aus den Abflüssen 3 und 5 (nach Zusammenführung und ggf. mit Ausnutzung der dabei entstehenden Reaktionswärme) können dabei erneut derselben oder einer anderen erfindungsgemäßen Anordnung zur nochmaligen Behandlung (Ringsystem oder Kaskadenanordnung) unterzogen werden, so daß eine Erhöhung der Salzkonzentration bis zur Salzabscheidung und eine Entsalzung möglich sind. Daraus ergeben sich vielfältige und kaum übersehbare Anwendungsmöglichkeiten für die Industrie und den Umweltschutz, indem z.B. aus Abwässern Rohstoffe gewonnen und diese Abwässer zur Verbesserung der Umweltbedingungen gleichzeitig aufbereitet und entsalzt werden können. Hinzu kommt, daß das Ent- und Aufsalzungsverfahren ökonomisch sehr günstig, energiesparend und wartungsarm ist. Aus der Elektrolyse ist bekannt, daß sich im elektrischen Feld bestimmte Elemente an den Elektroden mehr oder weniger leicht abscheiden. Ein solcher für die Wartungsfreiheit der Elektroden unerwünschter und nachteiliger Effekt tritt jedoch infolge der hohen Zahl an netzsynchronen Feldrichtungsänderungen nicht auf.

Patentansprüche:

1. Anordnung zur Veränderung der Salzkonzentration von Flüssigkeiten, gekennzeichnet dadurch, daß die Flüssigkeit gleichzeitig und gleichräumig einem magnetischen Wechselfeld und einem sich zu diesem synchron ändernden elektrischen Wechselfeld ungleicher Feldlinienrichtungen ausgesetzt ist und daß in der Flüssigkeit Strömungsbarrieren gegen die Bewegungsrichtung der Ionen angeordnet sind.

2. Anordnung nach Anspruch 1, gekennzeichnet dadurch, daß die Komponenten der Richtungen der Vektoren des magnetischen und elektrischen Wechselfeldes senkrecht aufeinander stehen.

3. Anordnung nach Anspruch 1, gekennzeichnet durch einen Zufluß der zu behandelnden Flüssigkeit, vorzugsweise in einem Volumenbereich der Flüssigkeit, welcher der Wirkung des elektrischen und des magnetischen Wechselfeldes ausgesetzt ist, wobei der Zufluß in einer von der durch die Einwirkung des magnetischen und des elektrischen Wechselfeldes hervorgerufenen Bewegungsrichtung der Ionen der Flüssigkeit abweichenden Richtung erfolgt, sowie durch voneinander getrennte Abflüsse in den jeweils unterschiedlichen Konzentrations- und unterschiedlichen Ionenpolaritätsbereichen der Flüssigkeit.

4. Anordnung nach Anspruch 3, gekennzeichnet dadurch daß die getrennten Abflüsse aus den unterschiedlichen Ionenpolaritätsbereichen der Flüssigkeit in einem Gefäß zusammengeführt sind, das vorzugsweise im thermischen Kontakt zu der zu behandelnden Flüssigkeit steht.

5. Anordnung nach Anspruch 3, gekennzeichnet dadurch, daß jeweils einer oder mehrere Abflüsse aus einem der Konzentrationsbereiche der Flüssigkeit erneut ein- oder mehrfach jeweils demselben oder jeweils einem anderen elektrischen und magnetischen Wechselfeld gemäß Anspruch 1 ausgesetzt sind.

0065490

Europäisches
Patentamt

**EUROPÄISCHER RECHERCHENBERICHT**

Nummer der Anmeldung

EP 82 81 0216

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-2 063 605 (B. CHABANIER et al.) <br> * Insgesamt * | 1-5 | C 02 F 1/48 |
| X | US-A-3 207 684 (W.M. DOTTS, JR.) <br> * Spalte 9, Anspruch 1 * | 1-3 | |
| A | DE-A-1 811 114 (R. KOCH) <br> * Ansprüche; Zeichnungen * | 1-4 | |
| A | DE-A-2 757 383 (A. KLASSERT) <br> * Seiten 21,22 * | 1 | |
| A | CH-A- 434 199 (LA GROLLA) <br> * Insgesamt * | 1 | |

RECHERCHIERTE SACHGEBIETE (Int. Cl. 3)

C 02 F

Der vorliegende Recherchenbericht wurde für alle Patentansprüche erstellt.

| Recherchenort <br> DEN HAAG | Abschlußdatum der Recherche <br> 17-08-1982 | Prüfer <br> VAN AKOLEYEN H.T.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503. 03.82